# EUROPÄISCHE PATENTSCHRIFT

(11) **EP 2 136 892 B1**
(45) Veröffentlichungstag und Bekanntmachung des Hinweises auf die Patenterteilung: **08.06.2011**
(21) Anmeldenummer: 08701629.1
(22) Anmeldetag: 22.01.2008
(51) Int. Cl.: B01D 3/00

(54) **AUFARBEITUNG BORHALTIGER CHLORSILANSTRÖME**
PROCESSING OF CHLOROSILANE FLOWS CONTAINING BORON
TRAITEMENT DE FLUX DE CHLOROSILANE CONTENANT DU BORE

(30) Priorität: 21.03.2007 DE 102007014107
(43) Veröffentlichungstag der Anmeldung: 30.12.2009
(73) Patentinhaber: Evonik Degussa GmbH, 45128 Essen (DE)
(72) Erfinder: SCHWARZ, Christoph, 45768 Marl (DE); SCHWARZ, Dorothea, 45768 Marl (DE); RAULEDER, Hartwig, 79618 Rheinfelden (DE); PAULI, Ingo, 61389 Schmitten (DE); NELTE, Andreas, 45739 Oer-Erkenschwick (DE); SEILER, Harald, 55130 Mainz (DE)
(86) Internationale Anmeldenummer: PCT/EP2008/050682
(87) Internationale Veröffentlichungsnummer: WO 2008/113619

(56) Entgegenhaltungen:
- WO-A-2006/054325
- DD-A3- 158 322
- US-A- 4 713 230

## Beschreibung

### Technisches Gebiet

Die vorliegende Erfindung betrifft ein Verfahren zur Gewinnung borabgereicherter Chlorsilane aus einer borhaltigen Chlorsilanmischung durch destillative Abtrennung eines borangereicherten Destillationsstroms. Die Erfindung betrifft weiterhin eine Vorrichtung zur Gewinnung borabgereicherter Chlorsilane aus einer borhaltigen Chlorsilanmischung.

### Hintergrund der Erfindung

Es ist bekannt, dass bei der Herstellung polykristallinen Siliciums, welches z. B. in der Photovoltaik oder bei der Glasfaser- oder Chipherstellung Verwendung findet, technisches Trichlorsilan (SiHCl₃, TCS) und/oder Siliciumtetrachlorid (SiCl₄, STC) als Rohmaterial eingesetzt wird. Diese Produkte enthalten verschiedene Verunreinigungen, wie z. B. andere Silane, etwa Dichlorsilan (SiH₂Cl₂, DCS), aber auch z. B. Borverbindungen, insbesondere Bortrichlorid (BCl₃).

Borhaltige Komponenten sind für die weitere Verwendung von TCS und STC, z. B. in den oben genannten Anwendungsbereichen in der Regel schädlich und müssen daher entfernt oder auf einen Zielwert reduziert werden. Restmengen an BCl₃ im Chlorsilan als Einsatzstoff stehen z. B. einer gezielten Dotierung des Reinstsiliziums im Weg. Typische Größenordnungen an Verunreinigungen liegen bei 0,1 bis 5 Gew.-ppm, gelegentlich auch bis 10 Gew.-ppm oder höher.

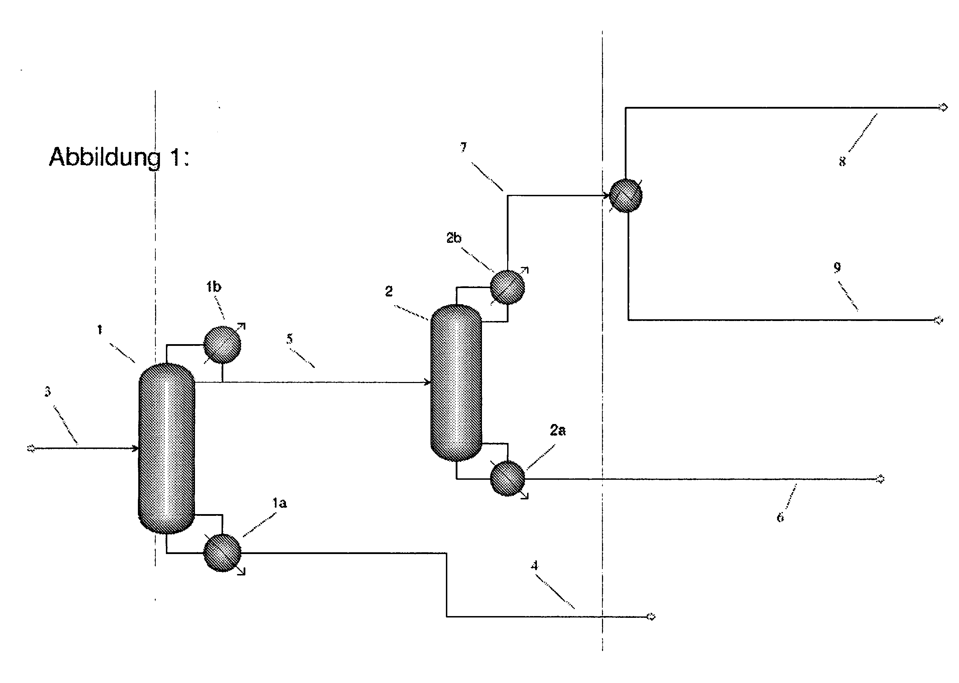

Die Abtrennung von Spurenkomponenten auf destillativem Wege ist in vielen Anwendungsfällen als schwierig bekannt. So liegen die Siedepunkte von Bortrichlorid (12,5°C) und z. B. Dichlorsilan (8,3°C) so nah beieinander, dass bei einer klassischen destillativen Aufarbeitungsroute, wie sie in Abbildung 1 gezeigt wird, die borhaltigen Verunreinigungen gemeinsam mit dem Dichlorsilan und einem hohen Anteil an Trichlorsilan über den Kopfstrom der zweiten Destillationskolonne, welche zur Auftrennung des Kopfstromes einer ersten Destillationskolonne verwendet wird, als sog. Leichtsieder wieder abgetrennt werden. Die auf diese Weise abgetrennte Leichtsiederfraktion, welche die Borverunreinigungen, insbesondere Bortrichlorid, enthält, wird dann entweder als Ganzes verworfen, oder sie wird einer nicht-destillativen Aufarbeitung unterzogen. Bei der nicht-destillativen Aufarbeitung werden z. B. Komplexierungsverfahren, wie sie in der WO 06/054325 beschrieben werden, verwendet. Bei dieser klassischen Aufarbeitungsroute entstehen Verluste an den Wertstoffen TCS und DCS.

Es stellt sich daher die Aufgabe, borhaltige Chlorsilanströme durch ein rein destillatives Verfahren so aufzuarbeiten, dass hochreine Chlorsilanfraktionen erhalten werden können, wobei insbesondere entweder borabgereichertes Dichlorsilan, Trichlorsilan und/oder Siliciumtetrachlorid oder auch borabgereicherte Gemische von Dichlorsilan und Trichlorsilan erhalten werden können und wobei der Verlust insbesondere an Dichlorsilan und Trichlorsilan durch Abtrennung borangereicherter Silanfraktionen verringert wird.

### Beschreibung der Erfindung

Die gestellte Aufgabe wird durch ein Verfahren zur Gewinnung borabgereicherter Chlorsilane aus einer borhaltigen Chlorsilanmischung durch destillative Abtrennung eines borabgereicherten Destillationsstroms gelöst, wobei bei einer Anordnung von einer oder mehreren Destillationskolonnen zumindest bei einer Destillationskolonne ein borangereicherter Seitenstrom abgezweigt wird. Dieser abgezweigte Seitenstrom kann entsorgt oder einer sonstigen Verwendung zugeführt werden. Durch die erfindungsgemäße Abtrennung eines borangereicherten Seitenstroms lassen sich borabgereicherte Ströme aus STC, DCS und TCS gewinnen, die ohne gesonderte Aufarbeitung vielfältig einsetzbar sind. Nur der verbleibende borhaltige Seitenstrom muss über Entsorgungssysteme, wie z. B. Wäsche und Hydrolyse, entsorgt werden, wobei geringere Verluste an DCS und/oder TCS entstehen als bei der in Abbildung 1 gezeigten klassischen Aufarbeitungsroute.

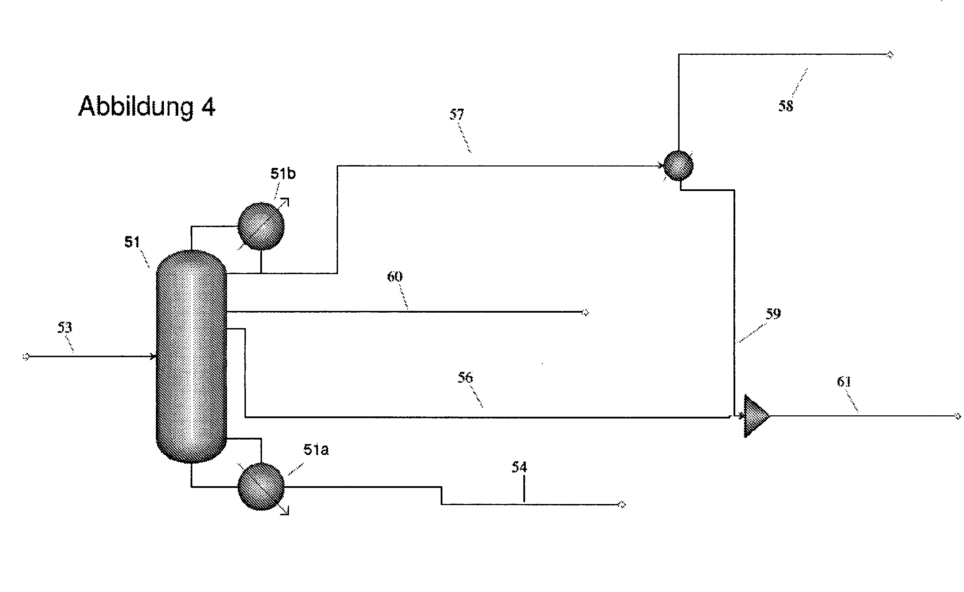

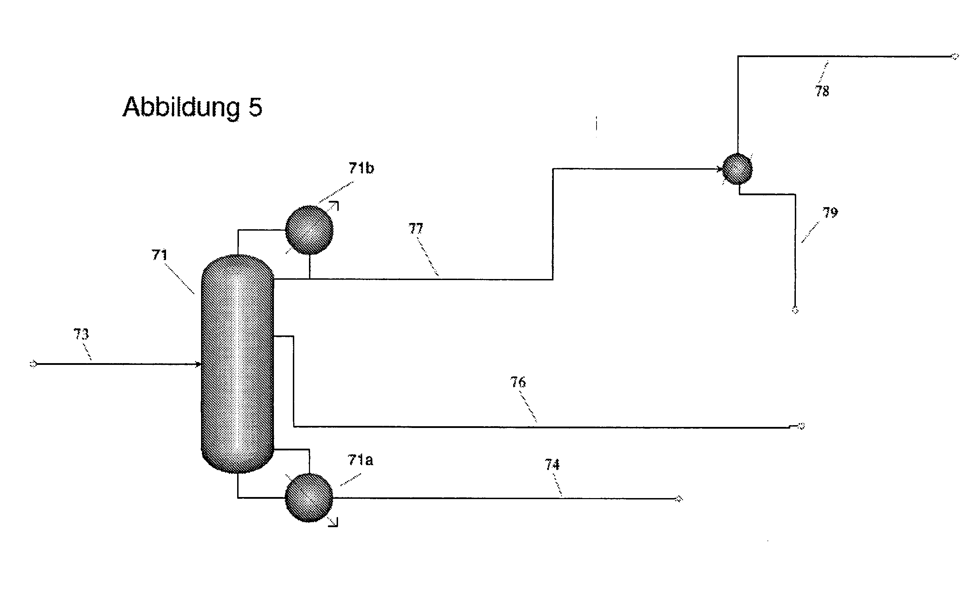

Eine alternative Ausführungsform der vorliegenden Erfindung sieht zur Gewinnung borabgereicherten Trichlorsilans aus einer borhaltigen Chlorsilanmischung ein Verfahren vor, wobei in einer Anordnung von nur einer Destillationskolonne ein borabgereicherter Seitenstrom an Trichlorsilan abgezweigt wird. Dieses Trichlorsilan kann der weiteren Aufarbeitung oder einer sonstigen Verwendung zugeführt werden. Des Weiteren wird bei diesem Verfahren ein borangereicherter Kopf- oder Seitenstrom abgezweigt, welcher entsorgt oder einer sonstigen Verwendung zugeführt wird. Gemäß dieser Ausführungsform wird das borabgereicherte Chlorsilan als Seitenstrom entnommen, wobei die Entfernung der borhaltigen Verbindungen entweder über einen weiteren Seitenstrom erfolgt oder über einen borangereicherten Kopfstrom (vgl. Abbildungen 4 und 5).

Die gemeinsame Idee bei beiden oben genannten Verfahren besteht darin, dass über einen Seitenstrom boran- oder borabgereicherte Chlorsilanströme abgezweigt -werden; um letztlich zu borabgereicherten Chlorsilanen, -nämlich borabgereichertes Dichlorsilan, Trichlorsilan und/oder Siliciumtetrachlorid oder auch borabgereicherte Gemische von Dichlorsilan und Trichlorsilan, zu gelangen.

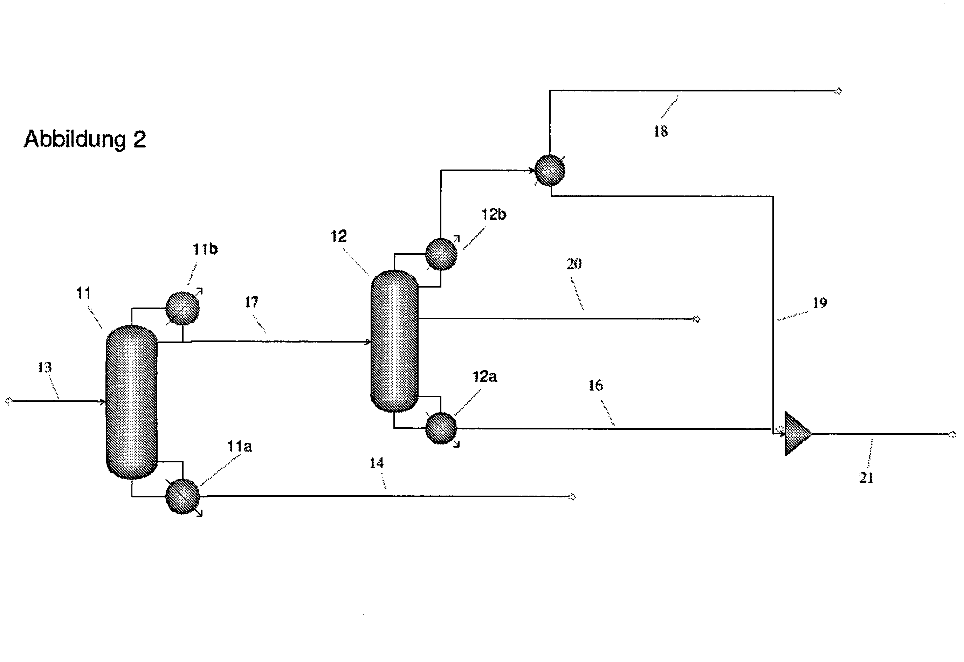

In einer bevorzugten Ausführungsform der Erfindung wird in beiden obigen Verfahren an der einen Destillationskolonne bzw. an der untersten Destillationskolonne ein borabgereicherter Sumpfstrom an Tetrachlorsilan abgezweigt und der weiteren Aufarbeitung oder einer sonstigen Verwendung zugeführt (vgl. Abbildungen 2, 3 und 4).

Mit "unterste Destillationskolonne" ist bei einer Anordnung mehrerer Destillationskolonnen die Kolonne gemeint, die im höchsten Siedetemperaturbereich der zugeführten Chlorsilanmischung arbeitet, bei der also gegebenenfalls als Sumpfstrom Tetrachlorsilan abgezweigt wird. Mit "oberste Destillationskolonne" ist entsprechend die Kolonne gemeint, die im niedrigsten Siedetemperaturbereich arbeitet, bei der also gegebenenfalls Kopfstrom inerte Gase und Leichtsieder abgetrennt werden.

In einer bevorzugten Ausführungsform der Erfindung ist darüber hinaus vorgesehen, dass an der einen Destillationskolonne bzw. bei zumindest einer der Destillationskolonnen ein Seiten- oder ein Sumpfstrom an borabgereichertem Trichlorsilan abgezweigt und der weiteren Aufarbeitung oder einer sonstigen Verwendung zugeführt wird (vgl. Abbildungen 2 und 4).

Eine besondere Ausführungsform der Erfindung sieht vor, dass im Falle mehrerer Destillationskolonnen an einer dieser Destillationskolonnen, die nicht die unterste ist, ein Sumpfstrom an borabgereichertem Trichlorsilan abgezweigt wird (vgl. Abbildung 2).

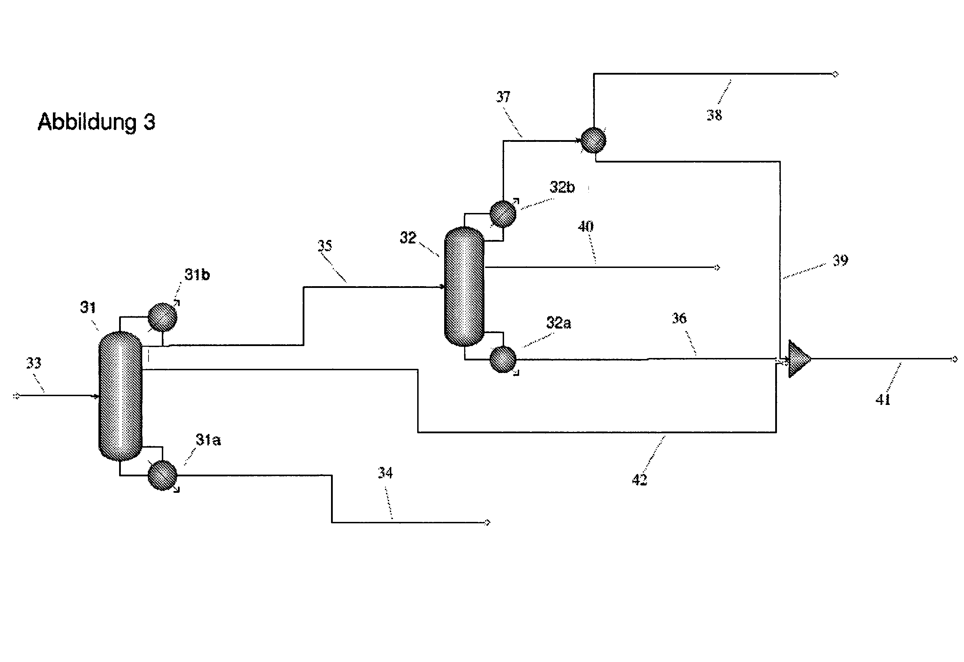

In einer anderen besonderen Ausführungsform der Erfindung ist vorgesehen, dass im Falle mehrerer Destillationskolonnen an einer dieser Destillationskolonnen ein Seitenstrom und an einer weiteren Destillationskolonne, die über der zuvor genannten Destillationskolonne liegt, ein Sumpfstrom an borabgereichertem Trichlorsilan abgezweigt wird, wobei optional beide borabgereicherten Trichlorsilanströme zusammengeführt werden können (vgl. Abbildung 3). Mit der Beschreibung "über der zuvor genannten Destillationskolonne" ist die Destillationskolonne gemeint, in der im Vergleich zu der darunter liegenden Destillationskolonne die höhersiedenden Fraktionen aufgetrennt werden.

Bei dem erfindungsgemäßen Verfahren kann außerdem vorgesehen sein, dass an der bzw. im Falle mehrerer Destillationskolonnen an zumindest einer der Destillationskolonnen, die nicht die unterste ist, ein Kopfstrom an borabgereichertem Dichlorsilan abgezweigt und, optional, mit dem oder den borabgereicherten Trichlorsilanströmen zusammengeführt (vgl. Abbildungen 2, 3 und 4) oder einer sonstigen Verwendung zugeführt wird.

Bei dem erfindungsgemäßen Verfahren kann vorzugsweise darüber hinaus vorgesehen sein, dass vom Kopfstrom der Destillationskolonne bzw. der obersten Destillationskolonne inerte Gase abgetrennt werden. Unter "inerte Gase" sollen hier nicht mit Kühlwasser oder üblichen Kältemischungen niederschlagbare gelöste Gase verstanden werden, z. B. N₂, H₂ und/oder HCl.

Bei dem erfindungsgemäßen Verfahren wird die Destillation oder werden die Destillationen bei einem Druck durchgeführt, der im Bereich zwischen 0,5 und 22 bar liegt, bevorzugt zwischen 1 und 10 bar, noch bevorzugter zwischen 1,5 und 5 bar, wobei bei mehreren Destillationskolonnen die jeweiligen Drücke in den einzelnen Kolonnen unabhängig voneinander gewählt sein können. Die Drücke in den jeweiligen Kolonnen innerhalb der genannten Druckbereiche richten sich auch nach wirtschaftlichen Aspekten, wobei die Wahl der Betriebsmittel z. B. für die Kondensation, z. B. Kühlwasser mit Umgebungstemperatur, oder für die Verdampfung, z. B. Dampf einer niedrigen Druckstufe, z. B. 4 bar, eine Rolle spielen kann. Die Destillationskolonnen sind vorzugsweise ausgestattet mit einem Kondensationssystem (Kondensator) zur Erzeugung des Rücklaufs auf die jeweilige Kolonne und einem oder mehreren Verdampfern zur Einstellung der Sumpftemperaturen. Die Kolonnen sind bestückt mit Destillationspackungen, Füllkörpern, Destillationsböden oder dergleichen, die die Trennleistung und den Druckverlust über die Kolonne bestimmen. Die Destillationen werden vorzugsweise im Temperaturbereich von -20°C bis 200 °C, weiter bevorzugt von 0°C bis 160 °C und besonders bevorzugt von 20°C bis 140°C durchgeführt. Die jeweils niedrigere Temperatur bezieht sich auf die Kondensationstemperatur des Hauptkondensators, also des Kondensators der den größten Anteil des Kolonnenbrüdens (Kolonnendampfes) kondensiert. In der Regel ist dies der erste Kondensator im Kondensationsweg. Die Trennleistung der Kolonnen wird im wesentlichen durch die für die Trennung der Hauptkomponenten STC, TCS und DCS notwendige Trennleistung bestimmt. Eingesetzt werden Kolonnen mit 10 bis 120 Trennstufen, vorzugsweise 20 bis 90 theoretischen Trennstufen, besonders bevorzugt 30 bis 80 oder weniger theoretischen Trennstufen.

In einer besonderen Ausführungsform des erfindungsgemäßen Verfahrens enthält die borhaltige Chlorsilanmischung, die der destillativen Aufbereitung zugeführt wird, jeweils vorzugsweise 2 bis 98 Gew.-%, bevorzugter 40 bis 95 Gew.-%, besonders bevorzugt 70 bis 90 Gew.-% Tetrachlorsilan; 1 bis 97 Gew.-%, bevorzugter 5 bis 50 Gew.-%, besonders bevorzugt 10 bis 30 Gew.-% Trichlorsilan; 0,01 bis 20 Gew.-%, bevorzugter 0,05 bis 5 Gew.-%, besonders bevorzugt 0,075 bis 1 Gew.-% Dichlorsilan sowie 0,1 bis 20 Gew.-ppm BCl₃, bevorzugter 0,5 bis 5 Gew.-ppm. Der zugeführte Massenstrom kann 1 000 bis 800 000 kg/h betragen.

In einer bevorzugten Ausführungsform des erfindungsgemäßen Verfahrens enthält der abgezweigte und vorzugsweise entsorgte borangereicherte Seitenstrom mindestens 20 %, vorzugsweise mindestens 50 %, besonders bevorzugt mehr als 80 % der in der der destillativen Aufbereitung zugeführten borhaltigen Chlorsilanmischung (Destillationseingangsfeed) enthaltenen Menge an BCl₃. Dabei ist der Gehalt an BCl₃ in dem borangereicherten Seitenstrom gegenüber dem Gehalt an BCl₃ in dem Kopfstrom der obersten Kolonne, der also u. a. die inerten Gase und Leichtsieder enthält, um den Faktor 1,5, vorzugsweise um den Faktor 2,5, besonders bevorzugt um den Faktor 5 oder darüber, angereichert. Typische BCl₃-Gehalte sind 100 Gew.-ppm bis 2 Gew.-%, vorzugsweise 250 bis 8 000 Gew.-ppm. Der abgezweigte Massenstrom kann 1 bis 100 kg/h betragen.

In einer weiteren bevorzugten Ausführungsform des erfindungsgemäßen Verfahrens enthalten der borabgereicherte Seiten- bzw. Sumpfstrom, bzw. die borabgereichten Seiten- und Sumpfströme an Trichlorsilan über 90 Gew.-%, vorzugsweise über 99 Gew.-%, besonders bevorzugt hochreines Trichlorsilan, wobei der Anteil an BCl₃ niedriger ist als der Anteil in der zugeführten borhaltigen Chlorsilanmischung (Destillationseingangsfeed). Der abgeführte Massenstrom bzw. zumindest einer der abgeführten Massenströme kann 1 000 bis 50 000 kg/h betragen.

In noch einer weiteren bevorzugten Ausführungsform des erfindungsgemäßen Verfahrens enthält der borabgereicherte Kopfstrom Leichtsieder, hauptsächlich Dichlorsilan, und inerte Gase und maximal 60 %, vorzugsweise maximal 50 %, besonders bevorzugt maximal 30 % des BCl₃, das in der zugeführten borhaltigen Chlorsilanmischung (Destillationseingangsfeed) enthalten war. Der so abgeführte Massenstrom kann 10 bis 1 000 kg/h betragen.

In einer besonderen Ausführungsform des erfindungsgemäßen Verfahrens enthält der zusammengeführte borabgereicherte Strom an Trichlorsilan und Dichlorsilan hauptsächlich Trichlorsilan und Dichlorsilan, wobei der Anteil an BCl₃ niedriger ist als der Anteil in der zugeführten borhaltigen Chlorsilanmischung (Destillationseingangsfeed). Der vereinigte und abgeführte Massenstrom kann 1 000 bis 50 000 kg/h betragen.

Ein weiterer Gegenstand der vorliegenden Erfindung ist eine Vorrichtung zur Gewinnung borabgereicherter Chlorsilane aus einer borhaltigen Chlorsilanmischung, umfassend
a) eine oder mehrere Destillationskolonnen, die zur Destillation borhaltiger Chlorsilanmischungen geeignet sind,
b) Mittel zur Zuführung einer borhaltigen Chlorsilanmischung, wobei das Mittel an der bzw. an der untersten Destillationskolonne angeordnet ist und zur Zuführung eines Massenstroms, vorzugsweise von 1 000 bis 800 000 kg/h, geeignet ist,
c) Mittel zur Abtrennung eines borabgereicherten Sumpfstromes an Tetrachlorsilan, wobei das Mittel an der bzw. an der untersten Destillationskolonne angeordnet und zur Abführung eines Massenstroms, vorzugsweise von 500 bis 750 000 kg/h, geeignet ist,
d) Mittel zur Abtrennung eines borabgereicherten Seiten- oder Sumpfstromes an Trichlorsilan, wobei das Mittel an zumindest einer der Destillationskolonnen angeordnet und zur Abführung eines Massenstroms, vorzugsweise von 1 000 bis 50 000 kg/h, geeignet ist,
e) Mittel zur Abtrennung eines borabgereicherten Kopfstromes an Leichtsiedem, hauptsächlich Dichlorsilan, wobei das Mittel an zumindest einer dieser Destillationskolonnen, die nicht die unterste ist, angeordnet und zur Abführung eines Massenstroms, vorzugsweise von 10 bis 1 000 kg/h, geeignet ist,
f) Mittel zur Abtrennung inerter Gase vom Kopfstrom der Destillationskolonne, bzw. im Falle mehrerer Destillationskolonnen, der obersten Destillationskolonne, und
g) optional, Mittel zur Zusammenführung der borabgereicherten Leichtsieder, hauptsächlich Dichlorsilan, vom Kopfstrom mit dem oder den zuvor abgetrennten borabgereicherten richtorsitanströmen sowie Mittel zur Abführung der vereinigten Chlorsilanströme, wobei letzteres zur Abführung eines Massenstroms, vorzugsweise von 1 000 bis 50 000 kg/h, geeignet ist,
wobei zumindest bei einer der Destillationskolonnen ein Mittel zur Abtrennung eines borangereicherten Seitenstroms angeordnet ist und das Mittel zur Abführung eines Massenstroms, vorzugsweise von 1 bis 100 kg/h, geeignet ist. Beispiele verschiedener Ausführungsformen der zuvor beschriebenen Vorrichtung sind in den Abbildungen 2 bis 4 dargestellt.

In einer alternativen Ausführungsform der Erfindung ist eine Vorrichtung zur Gewinnung borabgereicherter Chlorsilane aus einer borhaltigen Chlorsilanmischung vorgesehen, umfassend
a) eine zur Destillation borhaltiger Chlorsilanmischungen geeignete Destillationskolonne,
b) an der Destillationskolonne angeordnetes Mittel zur Zuführung einer borhaltigen Chlorsilanmischung, wobei das Mittel zur Zuführung eines Massenstroms, vorzugsweise von 1 000 bis 800 000 kg/h, geeignet ist,
c) an der Destillationskolonne angeordnetes Mittel zur Abtrennung eines borabgereicherten Sumpfstroms an Tetrachlorsilan, wobei das Mittel zur Abführung eines Massenstroms, vorzugsweise von 500 bis 750 000 kg/h, geeignet ist.
d) an der Destillationskolonne angeordnetes Mittel zur Abtrennung eines borabgereicherten Seitenstroms an Trichlorsilan, wobei das Mittel zur Abführung eines Massenstroms, vorzugsweise von 1 000 bis 50 000 kg/h, geeignet ist, und
e) Mittel zur Abtrennung inerter Gase vom Kopfstrom der Destillationskolonne, wobei zur Abtrennung des Bor an der Destillationskolonne Mittel zur Abtrennung eines borangereicherten Kopf- oder Seitenstroms angeordnet sind und das Mittel zur Abführung eines Massenstroms, vorzugsweise von 1 bis 100 kg/h, geeignet ist. Zwei Ausführungsbeispiele der zuvor genannten alternativen Vorrichtung gemäß der vorliegenden Erfindung sind in den Abbildungen 4 und 5 gezeigt.

Überall wo erfindungsgemäß ein Seitenstrom abgezweigt wird, kann dies anstatt in einer einfachen Kolonne ohne Trennwand auch in einer Trennwandkolonne erfolgen. Damit lassen sich eine höhere Reinheit und bessere Energieeinsparmöglichkeiten erzielen. Für den TCS-Seitenstrom lassen sich so z. B. BCl₃-Gehalte im mittleren bis niedrigen ppb-Bereich erreichen.

### Beispiele

### Vergleichsbeispiel 1

### Klassische Schaltung

Abbildung 1 zeigt eine klassische Destillationsanordnung bestehend aus einer ersten Destillationskolonne 1 inklusive Verdampfer 1a und Kondensator 1b, einer zweiten Destillationskolonne 2 inklusive Verdampfer 2a und Kondensator 2b, Mittel 3 zur Zuführung einer borhaltigen Chlorsilanmischung, Mittel 4 zur Abtrennung eines borabgereicherten Sumpfstromes an Tetrachlorsilan, Mittel 5 zur Überführung eines Kopfstroms an Leichsiedern von der ersten Destillationskolonne 1 zur zweiten Destillationskolonne 2, Mittel 6 zur Abtrennung eines borabgereicherten Sumpfstromes an Trichlorsilan von der zweiten Destillationskolonne 2, Mittel 7 zur Abführung eines Kopfstromes von der zweiten Destillationskolonne, der aufgetrennt wird in einen Strom inerter Gase 8 und eine Leichtsiederfraktion 9, enthaltend BCl₃, DCS und TCS, welche verworfen bzw. der weiteren Aufarbeitung zugeführt werden.

Tabelle 1 zeigt die Massenanteile der einzelnen Komponenten in den jeweiligen Teilströmen in der Anordnung gemäß Vergleichsbeispiel 1 und gibt außerdem die jeweiligen Massenströme an. Dabei stellen die angegebenen Werte nur ein konkretes Beispiel für die Massenanteile der einzelnen Komponenten in einer "klassischen Schaltung" gemäß Vergleichsbeispiel 1 dar:

| Massenstrom in Leitung | 3 | 6 | 9 |
|---|---|---|---|
| Massenanteil | | | |
| DCS | 0,001 | 0,001 | 0,596 |
| BCl₃ in ppm | 1 | 1 | 496 |
| TCS | 0,177 | 0,999 | 0,404 |
| SiCl₄ | 0,819 | 0 | 0 |
| Andere | 0,004 | 0 | 0 |
| Massenstrom kg/h | 50 000 | 8789 | 74 |

### Beispiel 2

### Borausschleusung im Seitenstrom einer Leichtsiederkolonne

Abbildung 2 zeigt eine bevorzugte Ausführungsform einer erfindungsgemäßen Destillationsanordnung umfassend eine erste Destillationskolonne 11 inklusive Verdampfer 11a und Kondensator 11 b, eine zweite Destillationskolonne 12 inklusive Verdampfer 12a und Kondensator 12b, Mittel 13 zur Zuführung einer borhaltigen Chlorsilanmischung, Mittel 14 zur Abtrennung eines borabgereicherten Sumpfstromes an Tetrachlorsilan, Mittel 15 zur Überführung eines Kopfstroms Leichtsieder von der ersten Destillationskolonne 11 zur zweiten Destillationskolonne 12, Mittel 16 zur Abtrennung eines borabgereicherten Sumpfstromes an Trichlorsilan, Mittel 17 zur Abtrennung eines borabgereicherten Kopfstromes Leichtsieder, von dem inerte Gase 18 und eine Dichlorsilanfraktion 19 abgetrennt werden, sowie Mittel 20 zur Abtrennung eines borangereicherten Seitenstroms von der zweiten Destillationskolonne 12, wobei der abgezweigte Seitenstrom 20 der Borausschleusung dient. Des weiteren zeigt die Abbildung 2 Mittel 21 zur Abführung der vereinigten Dichlorsilan- 19 und Trichlorsilanströme 16.

Tabelle 2 zeigt anhand eines konkreten Beispiels die Massenanteile der einzelnen Komponenten in den jeweiligen Teilströmen in der Anordnung gemäß Beispiel 2 und gibt die jeweiligen Massenströme an:

| Massenstrom in Leitung | 13 | 16 | 19 | 20 | 21 |
|---|---|---|---|---|---|
| Massenanteil | | | | | |
| DCS | 0,001 | 0 | 1 | 0,894 | 0,005 |
| BCl₃ in ppm | 1 | 1 | 247 | 5200 | 2 |
| TCS | 0,177 | 1 | 0 | 0,1 | 0,995 |
| SiCl₄ | 0,819 | 0 | 0 | 0 | 0 |
| Andere | 0,004 | 0 | 0 | 0 | 0 |
| Massenstrom kg/h | 50000 | 8808 | 48 | 7 | 8856 |

### Beispiel 3

### TCS-Darstellung als Seitenstrom mit effizienterer Ausschleusung von Bor im Seitenstrom einer Leichtsiederkolonne

Abbildung 3 zeigt eine weitere bevorzugte Ausführungsform einer erfindungsgemäßen Destillationsanordnung umfassend eine erste Destillationskolonne 31 inklusive Verdampfer 31 a und Kondensator 31 b, eine zweite Destillationskolonne 32 inklusive Verdampfer 31 a und Kondensator 31 b, Mittel 33 zur Zuführung einer borhaltigen Chlorsilanmischung, Mittel 34 zur Abtrennung eines borabgereicherten Sumpfstromes an Tetrachlorsilan, Mittel 35 zur Überführung eines Kopfstroms Leichtsieder von der ersten Destillationskolonne 31 zur zweiten Destillationskolonne 32, Mittel 36 zur Abtrennung eines borabgereicherten Sumpfstromes an Trichlorsilan von der zweiten Destillationskolonne 32, Mittel 42 zur Abtrennung eines borabgereicherten Seitenstromes an Trichlorsilan von der ersten Destillationskolonne 31, Mittel 37 zur Abtrennung eines borabgereicherten Kopfstromes Leichtsieder, von dem inerte Gase 38 und eine Dichlorsilanfraktion 39 abgetrennt werden, sowie Mittel 40 zur Abtrennung eines borangereicherten Seitenstroms von der zweiten Destillationskolonne 32, wobei der abgezweigte Seitenstrom 40 der Borausschleusung dient. Des weiteren zeigt die Abbildung 3 Mittel 41 zur Abführung der vereinigten Dichlorsilan- 39 und Trichlorsilanströme 36 und 42.

Tabelle 3 zeigt anhand eines konkreten Beispiels die Massenanteile der einzelnen Komponenten in den jeweiligen Teilströmen in der Anordnung gemäß Beispiel 3 und gibt die jeweiligen Massenströme an:

| Massenstrom in Leitung | 33 | 42 | 36 | 39 | 40 | 41 |
|---|---|---|---|---|---|---|
| Massenanteil | | | | | | |
| DCS | 0,001 | 0,001 | 0 | 1 | 0,822 | 0,005 |
| BCl₃ in ppm | 1 | 1 | 5 | 62 | 5800 | 1 |
| TCS | 0,177 | 0,999 | 1 | 0 | 0,172 | 0,995 |
| SiCl₄ | 0,819 | 0 | 0 | 0 | 0 | 0 |
| Andere | 0,004 | 0 | 0 | 0 | 0 | 0 |
| Massenstrom kg/h | 50000 | 8526 | 288 | 42 | 7 | 8856 |

### Beispiel 4

### TCS-Darstellung als Seitenstrom, DCS-Rückgewinnung über den Kopfstrom und Ausschleusung von Bor im Seitenstrom

Abbildung 4 zeigt eine alternative Ausführungsform einer erfindungsgemäßen Destillationsanordnung umfassend eine Destillationskolonne 51 inklusive Verdampfer 51 a und Kondensator 51 b, Mittel 53 zur Zuführung einer borhaltigen Chlorsilanmischung, Mittel 54 zur Abtrennung eines borabgereicherten Sumpfstromes an Tetrachlorsilan, Mittel 56 zur Abtrennung eines borabgereicherten Seitenstromes an Trichlorsilan, Mittel 57 zur Abtrennung eines borabgereicherten Kopfstromes Leichtsieder, von dem inerte Gase 58 und eine Dichlorsilanfraktion 59 -abgetrennt werden, sowie Mittel 60 zur Abtrennung eines borangereicherten Seitenstroms von der Destillationskolonne 51, wobei der abgezweigte Seitenstrom 60 der Borausschleusung dient. Des Weiteren zeigt die Abbildung 4 Mittel 61 zur Abführung der vereinigten Dichlorsilan- 59 und Trichlorsilanströme 56.

**Tabelle 4 zeigt anhand eines konkreten Beispiels die Massenanteile der einzelnen Komponenten in den jeweiligen Teilströmen in der Anordnung gemäß Beispiel 4 und gibt die jeweiligen Massenströme an:**

| Massenstrom in Leitung | 53 | 56 | 59 | 60 |
|---|---|---|---|---|
| Massenanteil | | | | |
| DCS | 0,001 | 0,001 | 0,999 | 0,958 |
| BCl₃ in ppm | 1 | 1 | 530 | 1500 |
| TCS | 0,177 | 0,999 | 0 | 0,04 |
| SiCl₄ | 0,819 | 0 | 0 | 0 |
| Andere | 0,004 | 0 | 0 | 0 |
| Massenstrom kg/h | 50000 | 8815 | 35 | 13 |

### Beispiel 5

### TCS-Darstellung im Seitenstrom und Ausschleusung von Bor über den Kopfstrom ohne DCS-Rückgewinnung

Abbildung 5 zeigt eine weitere alternative Ausführungsform einer erfindungsgemäßen Destillationsanordnung umfassend eine Destillationskolonne 71 inklusive Verdampfer 71a und Kondensator 71b, Mittel 73 zur Zuführung einer borhaltigen Chlorsilanmischung, Mittel 74 zur Abtrennung eines borabgereicherten Sumpfstromes an Tetrachlorsilan, Mittel 76 zur Abtrennung eines borabgereicherten Seitenstromes an Trichlorsilan, Mittel 77 zur Abtrennung eines borangereicherten Kopfstromes Leichtsieder, von dem inerte Gase 78 und eine borangereicherte Silanfraktion 79 abgetrennt werden, wobei dieser Silanstrom 79 der Borausschleusung dient.

## Patentansprüche

1. Verfahren zur Gewinnung borabgereicherter Chlorsilane aus einer borhaltigen Chlorsilanmischung durch destillative Abtrennung eines borangereicherten Destillationsstroms, wobei in einer Anordnung von ein oder mehreren Destillationskolonnen zumindest bei einer Destillationskolonne ein borangereicherter Seitenstrom abgezweigt und entsorgt oder einer sonstigen Verwendung zugeführt wird.

2. Verfahren zur Gewinnung borabgereicherten Trichlorsilans aus einer borhaltigen Chlorsilanmischung durch destillative Abtrennung eines borangereicherten Destillationsstroms, wobei in einer Anordnung von nur einer Destillationskolonne ein borabgereicherter Seitenstrom an Trichlorsilan abgezweigt und der weiteren Aufarbeitung oder einer sonstigen Verwendung zugeführt wird und ein borangereicherter Kopf- oder Seitenstrom abgezweigt und entsorgt oder einer sonstigen Verwendung zugeführt wird.

3. Verfahren gemäß Anspruch 1 oder 2, wobei an der Destillationskolonne bzw. an der untersten Destillationskolonne ein borabgereicherter Sumpfstrom an Tetrachlorsilan abgezweigt und der weiteren Aufarbeitung oder einer sonstigen Verwendung zugeführt wird.

4. Verfahren gemäß einem der vorherigen Ansprüche, wobei zumindest bei einer Destillationskolonne ein Seiten- oder ein Sumpfstrom an borabgereichertem Trichlorsilan abgezweigt und der weiteren Aufarbeitung oder einer sonstigen Verwendung zugeführt wird.

5. Verfahren gemäß Anspruch 4, wobei im Falle mehrerer Destillationskolonnen an einer dieser Destillationskolonnen, die nicht die unterste ist, ein Sumpfstrom an borabgereichertem Trichlorsilan abgezweigt wird.

6. Verfahren gemäß Anspruch 4, wobei im Falle mehrerer Destillationskolonnen an einer dieser Destillationskolonnen ein Seitenstrom und an einer weiteren Destillationskolonne, die über der zuvor genannten Destillationskolonne liegt, ein Sumpfstrom an borabgereichertem Trichlorsilan abgezweigt wird, wobei optional beide borabgereicherten Trichlorsilanströme zusammengeführt werden.

7. Verfahren gemäß einem der vorherigen Ansprüche, wobei an der bzw. im Falle mehrerer Destillationskolonnen an zumindest einer der Destillationskolonnen, die nicht die unterste ist, ein Kopfstrom an borabgereichertem Dichlorsilan abgezweigt und, optional, mit dem oder den borabgereicherten Trichlorsilanströmen zusammengeführt oder einer sonstigen Verwendung zugeführt wird.

8. Verfahren gemäß Anspruch 7, wobei vom Kopfstrom der Destillationskolonne bzw. der obersten Destillationskolonne inerte Gase abgetrennt werden.

9. Verfahren gemäß einem der vorherigen Ansprüche, wobei die Destillation bei einem Druck durchgeführt wird, der im Bereich zwischen 0,5 und 22 bar liegt, vorzugsweise zwischen 1 und 10 bar, wobei bei mehreren Destillationskolonnen die jeweiligen Drücke unabhängig voneinander sein können.

10. Verfahren gemäß einem der Ansprüche 1 bis 9, wobei die borhaltige Chlorsilanmischung 2 bis 98 Gew.-%, bevorzugter 40 bis 95 Gew.-% Tetrachlorsilan; 1 bis 97 Gew.-%, bevorzugter 5 bis 50 Gew.-% Trichlorsilan; 0,01 bis 20 Gew.-%, bevorzugter 0,05 bis 5 Gew.-% Dichlorsilan sowie 0,1 bis 20 Gew.-ppm BCl₃, bevorzugter 0,5 bis 5 Gew.-ppm enthält.

11. Verfahren gemäß einem der Ansprüche 1 bis 9, wobei der borangereicherte Seitenstrom mindestens 20 %, vorzugsweise mindestens 50 % der im Destillationseingangsfeed enthaltenen Menge an BCl₃ enthält.

12. Verfahren gemäß einem der Ansprüche 1 bis 9, wobei der borabgereicherte Seiten- bzw. Sumpfstrom bzw. die borabgereicherten Seiten- und Sumpfströme an Trichlorsilan über 90 Gew.-%, bevorzugter 99 Gew.-% Trichlorsilan enthalten, wobei der Anteil an BCl₃ niedriger ist als der Anteil im Destillationseingangsfeed.

13. Verfahren gemäß einem der Ansprüche 1 bis 9, wobei der borabgereicherte Kopfstrom Leichtsieder, inerte Gase und maximal 60 %, vorzugsweise maximal 50 % der im Destillationseingangsfeed enthaltenen Menge an BCl₃ enthält.

14. Verfahren gemäß Anspruch 8, wobei der Anteil an BCl₃ in dem zusammengeführten borabgereicherten Strom an Trichlorsilan und Dichlorsilan niedriger ist als der Anteil im Destillationseingangsfeed.

15. Vorrichtung zur Gewinnung borabgereicherter Chlorsilane aus einer-borhaltigen Chlorsilanmischung, umfassend:
a) eine oder mehrere Destillationskolonnen, die zur Destillation borhaltiger Chlorsilanmischungen geeignet sind,
b) Mittel zur Zuführung einer borhaltigen Chlorsilanmischung, wobei das Mittel an der bzw. an der untersten Destillationskolonne angeordnet ist und vorzugsweise zur Zuführung eines Massenstroms von 1.000 bis 800.000 kg/h geeignet ist,
c) Mittel zur Abtrennung eines borabgereicherten Sumpfstromes an Tetrachlorsilan, wobei das Mittel an der bzw. an der untersten Destillationskolonne angeordnet und vorzugsweise zur Abführung eines Massenstroms von 500 bis 750.000 kg/h geeignet ist,
d) Mittel zur Abtrennung eines borabgereicherten Seiten- oder Sumpfstromes - an Trichlorsilan, wobei das Mittel an zumindest einer der Destillatiönskolonnen angeordnet und vorzugsweise zur Abführung eines Massenstroms von 1.000 bis 50.000 kg/h geeignet ist,
e) Mittel zur Abtrennung eines borabgereicherten Kopfstromes an Leichtsiedern, hauptsächlich Dichlorsilan, wobei das Mittel an zumindest einer dieser Destillationskolonnen, die nicht die unterste ist, angeordnet und vorzugsweise zur Abführung eines Massenstroms von 10 bis 1000 kg/h geeignet ist,
f) Mittel zur Abtrennung inerter Gase vom Kopfstrom der Destillationskolonne bzw. im Falle mehrerer Destillationskolonnen der obersten Destillationskolonne, und
g) optional, Mittel zur Zusammenführung der borabgereicherten Leichtsieder, hauptsächlich Dichlorsilan, vom Kopfstrom mit dem oder den zuvor abgetrennten borabgereicherten Trichlorsilanströmen sowie Mittel zur Abführung der vereinigten Chlorsilanströme, wobei letzteres vorzugsweise zur Abführung eines Massenstroms von 1.000 bis 50.000 kg/h geeignet ist,
wobei zumindest bei einer der Destillationskolonnen ein Mittel zur Abtrennung eines borangereicherten Seitenstrom angeordnet ist und das Mittel - vorzugsweise zur Abführung eines Massenstroms von 1 bis 100 kg/h geeignet ist.

16. Vorrichtung zur Gewinnung borabgereicherter Chlorsilane aus einer borhaltigen Chlorsilanmischung, umfassend:
a) eine zur Destillation borhaltiger Chlorsilanmischungen geeignete Destillationskolonne,
b) an der Destillationskolonne angeordnetes Mittel zur Zuführung einer borhaltigen Chlorsilanmischung, wobei das Mittel vorzugsweise zur Zuführung eines Massenstroms von 1.000 bis 800.000 kg/h geeignet ist,
c) an der Destillationskolonne angeordnetes Mittel zur Abtrennung eines borabgereicherten Sumpfstromes an Tetrachlorsilan, wobei das Mittel vorzugsweise zur Abführung eines Massenstroms von 500 bis 750.000 kg/h geeignet ist,
d) an der Destillationskolonne angeordnetes Mittel zur Abtrennung eines borabgereicherten Seitenstromes an frichlorsilan, wobei das Mittel vorzugsweise zur Abführung eines Massenstroms von 1.000 bis 50.000 kg/h geeignet ist, und
e) Mittel zur Abtrennung inerter Gase vom Kopfstrom der Destillationskolonne,
wobei zur Abtrennung des Bor an der Destillationskolonne Mittel zur Abtrennung eines borangereicherten Kopf- oder Seitenstrom angeordnet sind und das Mittel vorzugsweise zur Abführung eines Massenstroms von 1 bis 100 kg/h geeignet ist.

## Claims

1. Process for recovering boron-depleted chlorosilanes from a boron-containing chlorosilane mixture by distillatively removing a boron-enriched distillation stream, wherein, in an arrangement of one or more distillation columns, a boron-enriched side stream is branched off at least in one distillation column, and is disposed of or sent to another use.

2. Process for recovering boron-depleted trichlorosilane from a boron-containing chlorosilane mixture by distillatively removing a boron-enriched distillation stream, wherein, in an arrangement of only one distillation column, a boron-depleted side stream of trichlorosilane is branched off and is sent to further workup or to another use, and a boron-enriched top stream or side stream is branched off and is disposed of or sent to another use.

3. Process according to Claim 1 or 2, wherein a boron-depleted bottom stream of tetrachlorosilane is branched off in the distillation column or in the lowermost distillation column, and is sent to further workup or to another use.

4. Process according to any one of the preceding claims, wherein a side stream or a bottom stream of boron-depleted trichlorosilane is branched off at least in one distillation column, and is sent to further workup or to another use.

5. Process according to Claim 4, wherein, in the case of a plurality of distillation columns, a bottom stream of boron-depleted trichlorosilane is branched off in one of these distillation columns which is not the lowermost.

6. Process according to Claim 4, wherein, in the case of a plurality of distillation columns, a side stream is branched off in one of these distillation columns, and a bottom stream of boron-depleted trichlorosilane is branched off in a further distillation column above the aforementioned distillation column, in which case the two boron-depleted trichlorosilane streams are optionally combined.

7. Process according to any one of the preceding claims, wherein a top stream of boron-depleted dichlorosilane is branched off in the distillation column or, in the case of a plurality of distillation columns, in at least one of the distillation columns which is not the lowermost and optionally combined with the boron-depleted trichlorosilane stream(s) or sent to another use.

8. Process according to Claim 7, wherein inert gases are removed from the top stream of the distillation column or of the uppermost distillation column.

9. Process according to any one of the preceding claims, wherein the distillation is performed at a pressure in the range between 0.5 and 22 bar, preferably between 1 and 10 bar, and the particular pressures may be independent of one another in the case of a plurality of distillation columns.

10. Process according to any one of Claims 1 to 9, wherein the boron-containing chlorosilane mixture contains 2 to 98% by weight, more preferably 40, to 95% by weight, of tetrachlorosilane; 1 to 97% by weight, more preferably 5 to 50% by weight, of trichlorosilane; 0.01 to 20% by weight, more preferably 0.05 to 5% by weight, of dichlorosilane; and 0.1 to 20 ppm by weight of BCl₃, more preferably 0.5 to 5 ppm by weight.

11. Process according to any one of Claims 1 to 9, wherein the boron-enriched side stream contains at least 20%, preferably at least 50%, of the amount of BCl₃ present in the distillation input feed.

12. Process according to any one of Claims 1 to 9, wherein the boron-depleted side stream or bottom stream or the boron-depleted side streams and bottom streams of trichlorosilane contain more than 90% by weight of trichlorosilane, more preferably 99% of trichlorosilane, the proportion of BCl₃ being lower than the proportion in the distillation input feed.

13. Process according to any one of Claims 1 to 9, wherein the boron-depleted top stream contains low boilers, inert gases and not more than 60%, preferably not more than 50%, of the amount of BCl₃ present in the distillation input feed.

14. Process according to Claim 8, wherein the proportion of BCl₃ in the combined boron-depleted stream of trichlorosilane and dichlorosilane is lower than the proportion in the distillation input feed.

15. Apparatus for recovering boron-depleted chlorosilanes from a boron-containing chlorosilane mixture, comprising:
a) one or more distillation columns suitable for distillation of boron-containing chlorosilane mixtures,
b) means of supplying a boron-containing chlorosilane mixture, said means being arranged on the distillation column or on the lowermost distillation column and preferably being suitable for supplying a mass flow of 1000 to 800 000 kg/h,
c) means of removing a boron-depleted bottom stream of tetrachlorosilane, said means being arranged on the distillation column or on the lowermost distillation column and preferably being suitable for removing a mass flow of 500 to 750 000 kg/h,
d) means of removing a boron-depleted side stream or bottom stream of trichlorosilane, said means being arranged on at least one of the distillation columns and preferably being suitable for removing a mass flow of 1000 to 50 000 kg/h,
e) means of removing a boron-depleted top stream of low boilers, principally dichlorosilane, said means being arranged on at least one of these distillation columns which is not the lowermost and preferably being suitable for removing a mass flow of 10 to 1000 kg/h,
f) means of removing inert gases from the top stream of the distillation column or, in the case of a plurality of distillation columns, from the uppermost distillation column, and
g) optionally, means of combining the boron-depleted low boilers, principally dichlorosilane, from the top stream with the boron-depleted trichlorosilane stream(s) removed beforehand, and means of removing the combined chlorosilane streams, the latter preferably being suitable for removing a mass flow of 1000 to 50 000 kg/h,
wherein a means of removing a boron-enriched side stream is arranged at least in one of the distillation columns and the means is preferably suitable for removing a mass flow of 1 to 100 kg/h.

16. Apparatus for recovering boron-depleted chlorosilanes from a boron-containing chlorosilane mixture, comprising:
a) a distillation column suitable for distilling boron-containing chlorosilane mixtures,
b) means, arranged on the distillation column, of supplying a boron-containing chlorosilane mixture, said means preferably being suitable for supplying a mass flow of 1000 to 800 000 kg/h,
c) means, arranged on the distillation column, of removing a boron-depleted bottom stream of tetrachlorosilane, said means preferably being suitable for removing a mass flow of 500 to 750 000 kg/h,
d) means, arranged on the distillation column, of removing a boron-depleted side stream of trichlorosilane, said means preferably being suitable for removing a mass flow of 1000 to 50 000 kg/h, and
e) means of removing inert gases from the top stream of the distillation column,
wherein, for the removal of boron, means of removing a boron-enriched top stream or side stream are arranged on the distillation column and the means is preferably suitable for removing a mass flow of 1 to 100 kg/h.

## Revendications

1. Procédé d'obtention de chlorosilanes appauvris en bore à partir d'un mélange de chlorosilanes contenant du bore par séparation distillative d'un courant de distillation enrichi en bore, dans lequel un courant latéral enrichi en bore est prélevé d'au moins une colonne de distillation dans un agencement d'une ou de plusieurs colonnes de distillation, et éliminé ou conduit vers une autre utilisation.

2. Procédé d'obtention de trichlorosilane appauvri en bore à partir d'un mélange de chlorosilanes contenant du bore par séparation distillative d'un courant de distillation enrichi en bore, dans lequel un courant latéral de trichlorosilane appauvri en bore est prélevé dans un agencement d'uniquement une colonne de distillation, et conduit vers le traitement ultérieur ou une autre utilisation, et un courant de tête ou latéral enrichi en bore est prélevé et éliminé ou conduit vers une autre utilisation.

3. Procédé selon la revendication 1 ou 2, dans lequel un courant de fond de tétrachlorosilane appauvri en bore est prélevé d'une colonne de distillation ou de la colonne de distillation la plus inférieure, et conduit vers le traitement ultérieur ou une autre utilisation.

4. Procédé selon l'une quelconque des revendications précédentes, dans lequel un courant latéral ou de fond de trichlorosilane appauvri en bore est prélevé d'au moins une colonne de distillation, et conduit vers le traitement ultérieur ou une autre utilisation.

5. Procédé selon la revendication 4, dans lequel, dans le cas de plusieurs colonnes de distillation, un courant de fond de trichlorosilane appauvri en bore est prélevé dans une de ces colonnes de distillation, qui n'est pas la plus inférieure.

6. Procédé selon la revendication 4, dans lequel, dans le cas de plusieurs colonnes de distillation, un courant latéral est prélevé d'une de ces colonnes de distillation et un courant de fond de trichlorosilane appauvri en bore d'une autre colonne de distillation, qui se situe au-dessus de la colonne de distillation susmentionnée, les deux courants de trichlorosilane appauvris en bore étant éventuellement rassemblés.

7. Procédé selon l'une quelconque des revendications précédentes, dans lequel un courant de tête de dichlorosilane appauvri en bore est prélevé de la colonne de distillation ou, dans le cas de plusieurs colonnes de distillation, d'au moins une des colonnes de distillation, qui n'est pas la plus inférieure, et éventuellement rassemblé avec le ou les courants de trichlorosilane appauvris en bore ou conduit vers une autre utilisation.

8. Procédé selon la revendication 7, dans lequel des gaz inertes sont séparés du courant de tête de la colonne de distillation ou de la colonne de distillation la plus supérieure.

9. Procédé selon l'une quelconque des revendications précédentes, dans lequel la distillation est réalisée à une pression située dans la plage comprise entre 0,5 et 22 bar, de préférence entre 1 et 10 bar, dans le cas de plusieurs colonnes de distillation, les pressions respectives pouvant être indépendantes les unes des autres.

10. Procédé selon l'une quelconque des revendications 1 à 9, dans lequel le mélange de chlorosilanes contenant du bore contient 2 à 98 % en poids, de préférence 40 à 95 % en poids, de tétrachlorosilane ; 1 à 97 % en poids, de préférence 5 à 50 % en poids, de trichlorosilane ; 0,01 à 20 % en poids, de préférence 0, 05 à 5 % en poids, de dichlorosilane, ainsi que 0,1 à 20 ppm en poids de BCl₃, de préférence 0,5 à 5 ppm en poids.

11. Procédé selon l'une quelconque des revendications 1 à 9, dans lequel le courant latéral enrichi en bore contient au moins 20 %, de préférence au moins 50 %, de la quantité de BCl₃ contenue dans l'alimentation d'entrée de la distillation.

12. Procédé selon l'une quelconque des revendications 1 à 9, dans lequel le courant latéral ou de fond appauvri en bore ou les courants latéraux et de fond appauvris en bore de trichlorosilane contiennent plus de 90 % en poids, de préférence 99 % en poids, de trichlorosilane, la proportion de BCl₃ étant inférieure à la proportion dans l'alimentation d'entrée de la distillation.

13. P r o cédé selon l'une quelconque des revendications 1 à 9, dans lequel le courant de tête appauvri en bore contient des composés de point d'ébullition bas, des gaz inertes et au plus 60 %, de préférence au plus 50 %, de la quantité de BCl₃ contenue dans l'alimentation d'entrée de la distillation.

14. Procédé selon la revendication 8, dans lequel la proportion de BCl₃ dans le courant de trichlorosilane et dichlorosilane appauvri en bore rassemblé est inférieure à la proportion dans l'alimentation d'entrée de la distillation.

15. Dispositif d'obtention de chlorosilanes appauvris en bore à partir d'un mélange de chlorosilanes contenant du bore, comprenant :
a) une ou plusieurs colonnes de distillation, qui sont appropriées pour la distillation de mélanges de chlorosilanes contenant du bore,
b) u n m o y e n d' alimentation d'un mélange de chlorosilanes contenant du bore, le moyen étant placé sur la colonne de distillation ou sur la colonne de distillation la plus inférieure et étant de préférence approprié pour l'alimentation d'un débit massique de 1 000 à 800 000 kg/h,
c) un moyen de séparation d'un courant de fond de tétrachlorosilane appauvri en bore, le moyen étant placé sur la colonne de distillation ou sur la colonne de distillation la plus inférieure et étant de préférence approprié pour le déchargement d'un débit massique de 500 à 750 000 kg/h,
d) un moyen de séparation d'un courant latéral ou de fond de trichlorosilane appauvri en bore, le moyen étant placé sur au moins une des colonnes de distillation et étant de préférence approprié pour le déchargement d'un débit massique de 1 000 à 50 000 kg/h,
e) un moyen pour la séparation d'un courant de tête appauvri en bore de composés de point d'ébullition bas, principalement de dichlorosilane, le moyen étant placé sur au moins une de ces colonnes de distillation, qui n'est pas la plus inférieure, et étant de préférence approprié pour le déchargement d'un débit massique de 10 à 1 000 kg/h,
f) un moyen pour la séparation de gaz inertes du courant de tête de la colonne de distillation ou, dans le cas de plusieurs colonnes de distillation, de la colonne de distillation la plus supérieure, et
g) éventuellement un moyen pour le rassemblement des composés de point d'ébullition bas appauvris en bore, principalement du dichlorosilane, du courant de tête avec le ou les courants de trichlorosilane appauvris en bore séparés auparavant, ainsi qu'un moyen de déchargement des courants de chlorosilanes réunis, ce dernier étant de préférence approprié pour le déchargement d'un débit massique de 1 000 à 50 000 kg/h,
un moyen de séparation d'un courant latéral enrichi en bore étant placé sur au moins une des colonnes de distillation et le moyen étant de préférence approprié pour le déchargement d'un débit massique de 1 à 100 kg/h.

16. Dispositif d'obtention de chlorosilanes appauvris en bore à partir d'un mélange de chlorosilanes contenant du bore, comprenant :
a) une colonne de distillation appropriée pour la distillation de mélanges de chlorosilanes contenant du bore,
b) un moyen placé sur la colonne de distillation pour l'alimentation d'un mélange de chlorosilanes contenant du bore, le moyen étant de préférence approprié pour l'alimentation d'un débit massique de 1 000 à 800 000 kg/h,
c) un moyen placé sur la colonne de distillation pour la séparation d'un courant de fond de tétrachlorosilane appauvri en bore, le moyen étant de préférence approprié pour le déchargement d'un débit massique de 500 à 750 000 kg/h,
d) un moyen placé sur la colonne de distillation pour la séparation d'un courant latéral de trichlorosilane appauvri en bore, le moyen étant de préférence approprié pour le déchargement d'un débit massique de 1 000 à 50 000 kg/h,
e) un moyen pour la séparation de gaz inertes du courant de tête de la colonne de distillation,
des moyens pour la séparation d'un courant de tête ou latéral enrichi en bore étant placés sur la colonne de distillation pour la séparation du bore et le moyen étant de préférence approprié pour le déchargement d'un débit massique de 1 à 100 kg/h.
